Europäisches Patentamt

European Patent Office

Office européen des brevets

(11) Publication number: 0 385 192
A1

## EUROPEAN PATENT APPLICATION

(21) Application number: 90102947.0

(22) Date of filing: 15.02.90

(51) Int. Cl.⁵: B60C 17/00, B60C 13/04

(30) Priority: 02.03.89 IT 1961589

(43) Date of publication of application:
05.09.90 Bulletin 90/36

(84) Designated Contracting States:
AT BE CH DE ES FR GB GR LI LU NL SE

(71) Applicant: PIRELLI COORDINAMENTO
PNEUMATICI Società per Azioni
Piazzale Cadorna, 5
I-20123 Milan(IT)

(72) Inventor: Mezzanotte, Mario
Via Argellati, 28
I-20143 Milan(IT)
Inventor: Bottasso, Franco
Via Sismondi, 5
I-20133 Milan(IT)
Inventor: Orlandi, Michele
Via G. Galilei, 11/1
I-20069 Vaprio d'Adda (Milan)(IT)

(74) Representative: Giannesi, Pier Giovanni et al
Industrie Pirelli S.p.A. Direzione Brevetti
Piazzale Cadorna, 5
I-20123 Milano(IT)

(54) High performance tire.

(57) The invention relates to high-performance tyres provided with self-supporting capability, that is capable of running at high speed and for rather long periods even if they are completely deflated.

The tyre is comprised of a lenticular section member (9) made of elastomeric material of average hardness, disposed at the inside of the tyre side and incorporating a textile reinforcement insert (10) provided with cords oriented towards a substantially radial direction and extending radially from the side centre line as far as under the end of the belt.

FIG. 1

EP 0 385 192 A1

## HIGH-PERFORMANCE TYRE

The present invention relates to tyres for vehicle wheels and particularly to tyres designed for use in high specific horsepower vehicles (HP/ton) capable of developing very high speeds and therefore bound to ensure a high reliability and safety degree.

Tyres designed for these vehicles must be capable of ensuring a very high performance, in other words they must possess some behaviour features to the highest degree such as directional stability, sure roadholding under all ride conditions, lateral stability when bending and drifting, ready response to steering and, which is important too, a high level of comfort.

Due to the type of performance they must develop and the quality level in which they are included, said tyres must also possess a good "self-supporting capability", that is to say they must be capable of running also under deflated conditions for a given length and to a non-negligible speed.

Self-supporting typres have already been on the market: they adopt a plurality of solutions and surely more or less they attain the aimed result, that is the possibility of running even if they are deflated; but on the other hand all these solutions adversely affect the other features of the tyres and particularly the comfort said tyres offer when they are normally used that is in an inflated condition.

Obviously this result is not very important in the case of typres in which self-support is to be considered the prevailing feature but it cannot be accepted in the tyres being the subject of the present invention in which self-support must be an additional feature and not replace one of the other qualitative features of the tyre.

This situation can be best understood taking into account the fact that one of the known solutions consists in disposing a big lunette made of very hard elastomeric material within the tyre sidewall, in an axially inner position to the carcass ply, which lunette is capable of supporting by itself, due to its compressive strength, the weight lying on the wheel when as a result of the tyre deflation the sustentation action of the air is missing.

But this big lunette must have very important geometric sizes as well as particular viscoelastic features so that it may exert the supporting action it has been studied for. As a result there is an increase in the tyre weight and consequently an increase in the rotating mass and in the stresses to which the tyre structure is submitted, the development of a high amount of heat in use, and consequently a quicker degradation of the strength features of the tyre structure, and finally an important stiffness of the tyre side which brings about a decrease in comfort.

As regards heat developed by the big lunette, the solution has been proposed of accomplishing the big lunette by assembling two lunettes made of elastomeric material and burying a core cloth in said big lunette in the region of separation between the two lunettes, which core cloth aims at disposing of this heat: but firstly this solution does not solve the proposed aim because it is unknown where heat withdrawn from the big lunette and absorbed by the cloth can be dissipated and secondly it increases the loss of comfort due to the fact that by introducing the core cloth into the big lunette the stiffness of the tyre side is greatly increased.

In the attempt of reducing the thickness of said big lunette it has been then proposed the use of thinner lunettes made of a very soft and not very hysteretic composition to be introduced, as in a closed container, into the carcass plies.

This solution which is surely very advantageous for the achievement of the proposed aims, is not however the best one for the tyres of the present invention, since the double-ply carcass with the lunettes introduced into the sidewalls, between the plies, greatly conditions the stiffness value of the sides, which results in a decrease in the comfort level.

On the other hand, the only reduction in the thickness of the big lunette in itself is not possible because it reduces the tyre self-support as much as it solves the other above mentioned problems.

Not even the use of differentiated or particularly featured elastomeric materials (such as foamed or cellular materials) is adapted to give a satisfactory solution to the tyres being the subject of the present invention, taking mainly into account the important volumes of the materials to be used.

The applicant has now found that it is possible to achieve a good level of self-supporting capability in tyres of very high performance without affecting said high performance and therefore the aim of the present invention is a tyre for vehicle wheels which is provided with a new carcass structure adapted to give the tyre itself a good level of self-supporting capability, not lower than that of known typres while ensuring a high qualitative level of the other behaviour features which are even higher than those of known self-supporting tyres especially as regards the comfort they can offer.

It is therefore an object of the present invention a tyre for vehicle wheels provided with a textile carcass comprising at least a ply made of reinforcing cords inclined at an angle not lower than 70° with respect to the circumferential direction of the tyre, a tread band disposed crown-wise on said carcass, a ring-shaped reinforcement structure introduced between said tread band and carcass, substantially as wide as said tread band, sides and beads for anchoring said tyre to a corresponding mounting rim, said sides being comprised of an annular section member made of elastomeric material, of substantially lenticular form in section, extending radially from said bead to said crownwise area and axially under the corresponding end of said ring-shaped reinforcement structure, said beads consisting of an annular circumferentially inextensible reinforcement core and a filling made of elastomeric material and of substantially triangular form in section, radially overlapping said annular reinforcement core, characterized in that said annular section member incorporates a textile reinforcement element located at least in the region of the radially exterior centre line of the side and axially extending at least as far as the radially external end of said annular section member, which is comprised of reinforcement cords inclined to the circumferential direction of the tyre according to an angle of at least 60°. Preferably said cords are also disposed so that they intersect the reinforcement cords of the carcass ply.

According to an advantageous alternative embodiment of the tyre of the invention, said textile insert is a single insert extending axially from one side of the tyre to the other and radially towards the beads, however not beyond the end of said filling.

The present invention will best be understood with the aid of the following description and the accompanying drawings given by way of example only, in which:

    - Fig. 1 is an axially right sectional view of the tyre of the invention according to one embodiment;

    - Fig. 2 is still an axially right sectional view of the tyre of the invention according to a second advantageous embodiment thereof.

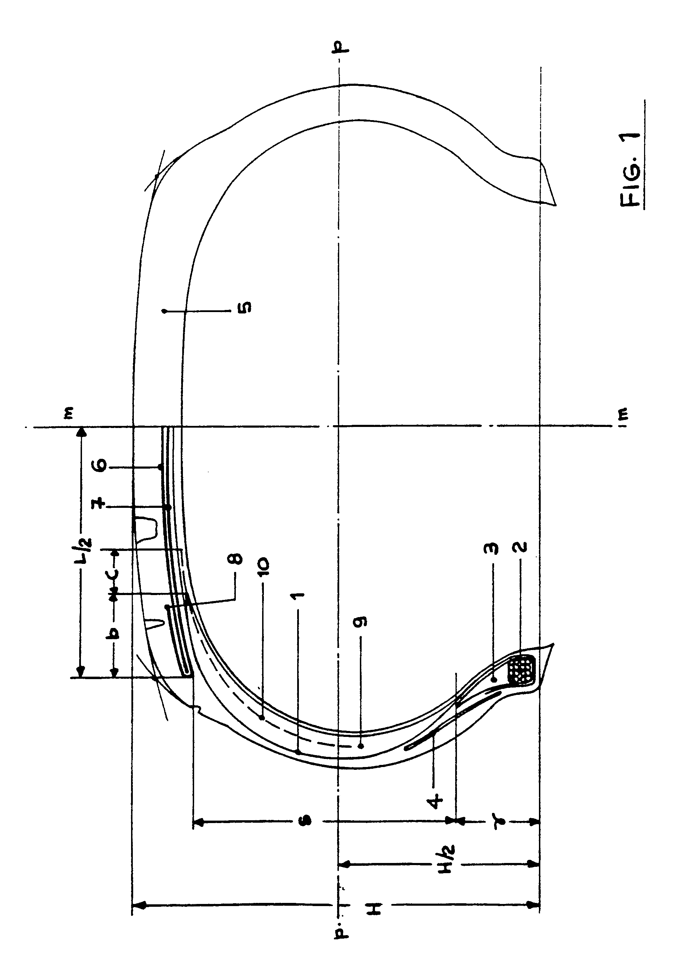

Referring to Fig. 1, the inventive tyre which is symmetric to the centre line axis m-m, comprises a carcass consisting of at least a ply 1 made of textile cords disposed according to a substantially radial orientation, that is inclined to a plane containing the axis of the tyre according to an angle preferably different from 0° and however not exceeding the value of 20°, and preferably different in the crown area and the sides: in other words, relative to the circumferential direction of the tyre said cords are inclined at an angle not lower than 70° and preferably in the range of 75° in the crown area and at an angle of 85° in the side area.

The carcass ply has both ends axially folded over from the inside to the outside each around an annular circumferentially inextensible core 2 usually known as bead core and consisting of a ring made of core turns disposed in side by side relation according to a well known technology.

The reinforcement cords of said carcass ply can be of any appropriate known textile material: in particular, according to a convenient embodiment, they are made of a thermoshrinkable material such as nylon; in addition, it is also possible to use, instead of cords intended in the traditional meaning of the world, also single monofilaments or straps (that is monofilaments having a substantially rectangular section) and it is therefore understood that within the meaning of "cords" any type of known reinforcement element is included.

Depending upon the type of reinforcement element used (cords or monofilaments) the reinforcement element mesh is in the range of 80 to 120 threads/dm (measured on the cured tyre), the mesh value in the sides being preferably lower than in the region of the equatorial plane of the tyre: for example in a specimen manufactured by the applicant said values have been fixed to 105 and 110 threads/dm respectively.

Located above said bead core at a radially outside position is an element 3, usually known as filling, made of elastomeric material which has an appropriate hardness and is of a substantially triangular right section.

This filling has exactly the function of filling the loop formed by the turn-up of the carcass ply around the bead core and of suitably stiffening the corresponding area of the tyre.

Such area, that is that including the bead core and the filling thereof and having a radial extension "r" (Fig. 1) is usually defined as "bead" and its strength and stiffness features are of fundamental importance for the good operation of the coupling between tyre and rim.

In this bead area other reinforcing elements can be arranged, such as the edge 4 constituting a sort of extension of the carcass ply turn-up; anyway it is not necessary to give further details here as regards these reinforcing elements as they are made according to the normal technology in the field and in addition are not pertinent to the present invention. The area "s" radially external to the bead and extending almost as far as the carcass top, constitutes the tyre side: the tyre comfort mainly depends on the flexibility of said tyre side in the radial direction.

Disposed around said carcass is a band 5 made of elastomeric material in which during the curing process the tread pattern is molded.

The width of the tread band (L in Fig. 1) can be defined as the width of the corresponding pattern and its ends substantially mark the passage from the tread to the side.

Introduced between the tread band and the carcass ply is a ring-shaped reinforcement structure substantially as wide as the tread and circumferentially inextensible, usually known as the belt; this structure too can have any configuration according to the known technology: the applicant has found a particularly convenient specific embodiment according to which the belt consists of a composite structure first of all comprising a layer 6 of metallic cords, parallel to one another in the layer itself and inclined to the circumferential direction of the tyre according to an angle included between 15° and 20°, preferably in the region of 17°.

Said core cord layer is surrounded by a strip 7 of textile cords parallel to each other in the strip and inclined to the circumferential direction of the tyre according to an angle ranging between 15° and 20°, preferably in the region of 18°, but disposed so as to intersect the cords of the metal layer.

The strip 7 of textile cords is substantially wider than the layer 6 of metallic cords and the edges 8 thereof are folded back axially towards the inside and radially towards the outside around the layer of metallic cords.

Said textile strip has been disposed in a position radially internal to the metal layer, but it can be also disposed in a radially external position, thus folding back the edges 8 around the layer 6 in a radially inner position.

In particular versions of the tyre a further strip of circumferentially oriented textile cords made of thermoshrinkable material can be arranged in a position radially external to said structure (layer 6 and strip 7).

In accordance with the invention, at the tyre sides in an axially inner position with respect to the carcass plies there is an annular section member 9 made of elastomeric material having a lenticular form with tapered ends and extending radially from the bead area to the tread as far as it inserts its end under the belt in the region of the edge 8; in other words the overlapping area between said belt structure and lenticular section member has a width "b" not larger than 22 % of the width L of said belt.

In the bead area the tapered end of said section member at least reaches the tip of the filling located upon the bead core but, in relation to the radial extension of said filling, can also have a length overlapping said filling.

The elastomeric material of which said section member is made, hereinafter and usually referred to as "lunette" is an average hardness material i.e. a hardness ranging between 55° and 75° Shore A, preferably in the region of 65° Shore A.

The thicker area of this lunette is located around the centre line of the side; at the centre line p-p of the side said thickness has a value conveniently included between 5 and 9 mm, at all events lower than 12 mm.

Incorporated in the lunette is a textile reinforcement insert 10 consisting of a ply made of textile cords inclined to the circumferential direction and preferably intersecting the carcass cords according to angles which in the crown area are substantially of the same amplitude as those of the carcass, but are rather different therefrom in the side area.

In greater detail, the inclination of the reinforcement cords in said textile insert is preferably kept in the region of 70° in the side area and 77° in the crown area, although it is never lower than 60° relative to the circumferential direction of the tyre.

Said insert is at least located in the region of the radially external centre line of the tyre side and extends from the centre line p-p as far as the end of the lunette and preferably projects to some extent therefrom thus creating a junction area "c" in which it overlaps the carcass ply, the width of said junction area having the same staggering values as between overlapped textile elements. The lying plane of this insert preferably follows the centre line of the lunette.

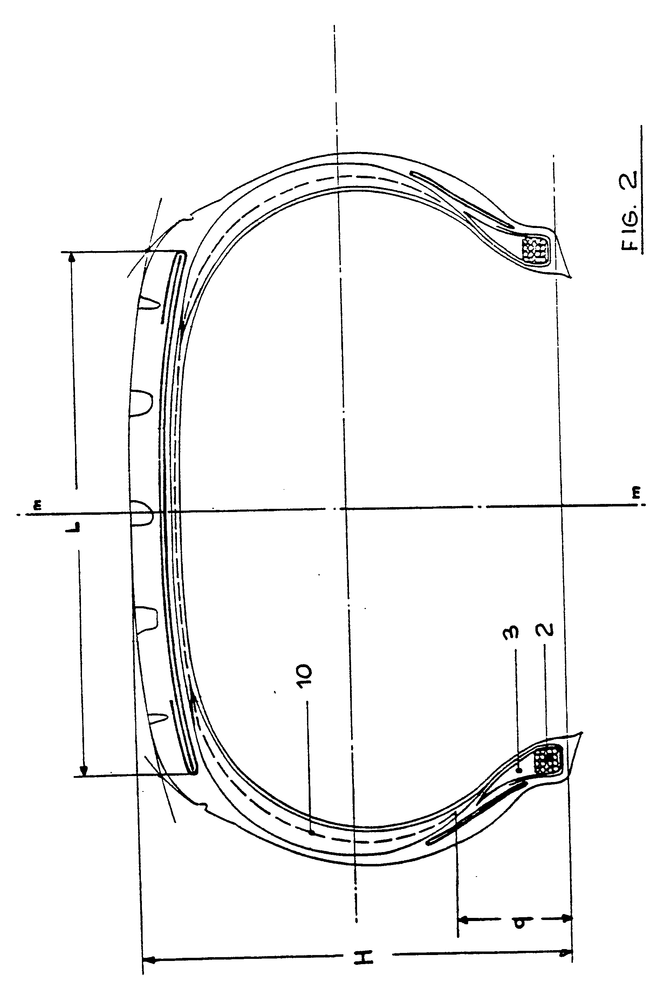

According to another embodiment of the invention shown in Fig. 2, there is a single insert 10 and it extends from one tyre side to the other and, at one side or both of them, can also radially go further towards the inside (height "q" in Fig. 2), although preferably not beyond the top of the filling (height "r") disposed upon the bead core and at all events it must not overcome said lunette: obviously this extension can also exist when there are two separate inserts, one for each side.

The cords of the insert 10 can be made of any convenient textile material which can be the same as that used for the carcass or a different one; in the same manner, for the insert 10 as well it is understood that within the meaning of "cords" any type of known reinforcement element is included, such as for example straps or monofilaments as above said. In the insert the reinforcement element mesh ranges between 90 and 130 threads/dm, and it is higher in the sides than in the crown: for example in the above mentioned specimen said values have been conveniently fixed to 120 and 110 threads/dm respectively.

At all events in the tyre sides in accordance with the invention the cord mesh of the insert 10 is higher than the cords mesh in the carcass; such mesh difference preferably must not be lower than 10% of the value relating to the carcass and it must even reach 50% of said value.

The inventive tyre has proved to be capable of solving the tackled problem in an efficient manner since it can exhibit very high behaviour features while possessing at the same time an excellent capability of running in a completely or partially deflated condition.

The reasons for the successful achievement of these results are probably different and interacting between each other.

First of all the textile insert 10 incorporated in the lunette and separated from the bead core exhibits a differentiated behaviour in relation to the situation of use of the tyre. In other words, during the normal running conditions of the tyre which is inflated to its usual operation pressure, it does not carry out any important action tending to sustain the tractive efforts.

The carcass is a single-ply carcass (or a carcass with a single group of associated plies) and, due to the relative softness of the lunette and above all to the fact that said insert is not folded back around the bead cores like a second carcass ply, keeps relatively low values in bending stiffness, which means that the side is always very flexible and therefore the tyre is always very comfortable. In fact during the cyclic deformation of the side under normal running conditions, since the textile insert in the lunette is not anchored to the bead core, it can freely follow the oscillations of the lunette in a radial direction thus keeping the side flexibility.

On the contrary, when there is an important bending deformation of the side, as in the case of a tyre running under a deflated condition, the insert which is arranged in the side area submitted to the greatest bending action performs an important role in the distribution in the axial direction of the efforts acting on the inner part of the side so as to bring about an optimal distribution of said efforts from the maximum tractive value in an axially external position to the maximun compressive value on the radially internal surface; in addition said insert, due to the fact that it has a higher value of the modulus of elasticity than the carcass ply, due to the reinforcement elements being thicker, makes the elastomeric material of said lunette stiffer, thereby artifically increasing the compressive modulus thereof, so that said lunette, although it has a reduced thickness and is made of an average hardness material, is capable of developing a sustentation action of the load acting on the wheel which is not lower than that achieved with the use of the big lunettes in known tyres.

In addition the insert incorporated in the lunette performs further advantageous functions as regards the behaviour of the tyre on the road.

Firstly, due to the preferred inclination of the cords, according to an angle substantially different from 90°, an important increase in the side stability of the tyre is achieved although this does not involve an increase in the bending stiffness of the side; secondly there is also a remarkable improvement in the behaviour of the tyre relative to the longitudinal component of the impulsive forces taken up by the tyre by effect of its impinging on possible upward projecting bumps.

This longitudinal component is in fact mostly taken up by the tyre structure and therefore is not transmitted to the vehicle, which has a benefic effect on the vehicle structure and the traveller's comfort.

Furthermore, in accordance with the second embodiment, a greater drift rigidity is achieved in the tyre, due to the fact that the carcass ply and the insert in the lunettes, in the region of the belt, constitute a pair of belt strips with crossed cords which are inclined according to an angle having a high value with respect to the circumferential direction of the tyre and therefore they constitute by themselves a stabilizing element and with the belt strips accomplish a triangle-shaped structure having a high transverse stiffness.

It is obviously understood that the present description has been given by way of non-limiting example only and therefore various structural and operational features disclosed are susceptible of a number of modifications and changes, which can be easily conceived by those skilled in the art, without departing from the scope of the present invention as defined in the appended claims.

## Claims

1) A tyre for vehicle wheels provided with a textile carcass (1) comprising at least a ply of reinforcing cords inclined at an angle not lower than 70° with respect to the circumferential direction of the tyre, a thread band (5) disposed crown-wise on said carcass, a ring-shaped reinforcement structure (6, 7) introduced between said tread band and carcass, substantially as wide as said tread band, sides and beads for anchoring said tyre to a corresponding mounting rim, said sides consisting of an annular section member (9) made of elastomeric material, of substantially lenticular form in section, extending radially from said bead to said crown-wise area and axially under the corresponding end of said ring-shaped reinforcement structure, said beads consisting of an annular circumferentially inextensible reinforcement core (2) and a filling (3) made of elastomeric material and of substantially triangular form in section, radially overlapping said annular reinforcement core, characterized in that said annular section member (9) incorporates a textile reinforcement element (10) located at least in the region of the radially exterior centre line of the side and axially extending at least as far as the radially external end of said annular section member, which is comprised of reinforcement cords inclined to the circumferential direction of the tyre according to an angle of at least 60°.

2) A tyre as claimed in claim 1, characterized in that said reinforcement cords are disposed so that they intersect the reinforcement cords of the carcass ply and are inclined thereto according to an angle the value of which is higher in said crown area and lower in said sides.

3) A tyre according to claim 1, characterized in that in said textile element (10) the mesh value of said reinforcement cords ranges between 90 and 130 threads/dm.

4) A tyre according to claim 1, characterized in that in said sides the mesh value of the reinforcement cords of the textile element (10) is higher than that of the cords of the carcass ply by an amount ranging between 10% and 50%.

5) A tyre according to claim 1, characterized in that said textile reinforcement element (10) extends radially towards said bead, not beyond the end of said filling (3).

6) A tyre according to claim 1, characterized in that said textile reinforcement element (10) lies along the centre line axis of said annular section member.

7) A tyre according to claim 1, characterized in that said textile reinforcement element (10) is a single element in the tyre and extends axially from one side to the opposite one.

8) A tyre according to claim 1, characterized in that the cords of said textile reinforcement element (10) are made of single monofilaments.

9) A tyre according to claim 1, characterized in that the overlapping area between said reinforcement ring-shaped structure (6, 7) and lenticular section member (9) is equal to 22% maximum of the width of said ring-shaped reinforcement structure.

10) A tyre according to claim 1, characterized in that the hardness of said lenticular section member (9) is in the range of 55° to 75° Shore A.

FIG. 1

EP 0 385 192 A1

FIG. 2

## DOCUMENTS CONSIDERED TO BE RELEVANT

EP 901029

| Category | Citation of document with indication where appropriate of relevant passages | Relevant to claim | CLASSIFICATION OF APPLICATION (Int |
|---|---|---|---|
| A | <u>GB - A - 2 138 367</u> (SOCIETA PNEUMATICI SOCIETA PER AZIONI) * Drawing; page 1, lines 32-62 * -- | 1,9 | B 60 C 17 B 60 C 13 |
| A | SOVIET INVENTIONS ILLUSTRATED, Q1 section, week 8714, July 29, 1987 DERWENT PUBLICATIONS LTD., London, WC1X8RP * SU 1266-763 (LARGE SIZE TYRE INS) * -- | 1 | |
| A | <u>US - A - 4 287 924</u> (DECK, LEFAUCHEUR) * Fig. 2; column 2, lines 38-65 * -- | 1 | |
| A | <u>US - A - 4 265 288</u> (KANEKO et al.) * Drawing; column 7, line 52 - column 8, line 22 * -- | 1 | TECHNICAL FIEL SEARCHED (Int ( B 60 C |
| A | <u>US - A - 3 954 131</u> (HOSHINO, FUJIKAWA) * fig. 2; column 4, lines 40-52 * ---- | 1 | |

The present search report has been drawn up for all claims

| Place of search | Date of completion of the search | Examiner |
|---|---|---|
| VIENNA | 30-04-1990 | WIDHALM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, correspond document

EPO Form 1503 03 82